(19) Europäisches Patentamt / European Patent Office / Office européen des brevets

(11) **EP 4 030 146 B1**

(12) **EUROPEAN PATENT SPECIFICATION**

(45) Date of publication and mention of the grant of the patent:
**17.07.2024 Bulletin 2024/29**

(21) Application number: **21151708.1**

(22) Date of filing: **14.01.2021**

(51) International Patent Classification (IPC):
**G01D 5/14** *(2006.01)*　　　**G01D 5/245** *(2006.01)*

(52) Cooperative Patent Classification (CPC):
**G01D 5/145; G01D 5/2454**

(54) **POSITION MEASURING MECHANISM AND MEASURING METHOD OF LINEAR MOTION SYSTEM**

POSITIONSMESSMECHANISMUS UND MESSVERFAHREN FÜR EIN LINEARBEWEGUNGSSYSTEM

MÉCANISME DE MESURE DE POSITION ET PROCÉDÉ DE MESURE DE SYSTÈME DE MOUVEMENT LINÉAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.07.2022 Bulletin 2022/29**

(73) Proprietor: **Hiwin Mikrosystem Corp.**
**Taichung City 40852 (TW)**

(72) Inventors:
- **Tiapkin, Mikhail**
  **40852 Taichung City (TW)**
- **Volkov, Sergey**
  **40852 Taichung City (TW)**
- **Tyapkin, Gennady**
  **40852 Taichung City (TW)**
- **Balkovoi, Aleksandr**
  **40852 Taichung City (TW)**
- **Tolstykh, Oleg**
  **40852 Taichung City (TW)**

(74) Representative: **Lang, Christian**
**LangPatent Anwaltskanzlei IP Law Firm**
**Ingolstädter Straße 5**
**80807 München (DE)**

(56) References cited:
**US-A1- 2019 047 794**　　**US-A1- 2020 166 389**

- **ZHEN SHENGCHAO ET AL: "Force Ripple Modeling and Minimizing of an Ironless Permanent-Magnet Linear Synchronous Motor", INTERNATIONAL JOURNAL OF PRECISION ENGINEERING AND MANUFACTURING, KOREAN SOCIETY FOR PRECISION ENGINEERING, SPRINGER, vol. 20, no. 6, 10 May 2019 (2019-05-10), pages 927 - 935, XP036810982, ISSN: 2234-7593, [retrieved on 20190510], DOI: 10.1007/S12541-019-00065-5**
- **RIGATOS GERASIMOS ET AL: "A nonlinear optimal control approach for PM Linear Synchronous Motors", 2018 IEEE 16TH INTERNATIONAL CONFERENCE ON INDUSTRIAL INFORMATICS (INDIN), IEEE, 18 July 2018 (2018-07-18), pages 453 - 458, XP033407929, DOI: 10.1109/INDIN.2018.8472019**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

BACKGROUND OF THE INVENTION

Field of Invention

The invention relates to position measurement technology, and more particularly to a position measuring mechanism and a measuring method of a linear motion system.

Related Art

Doubly Salient Permanent Magnet-Linear Synchronous Motor (DSPM-LSM) of discontinuous stator mainly consists of a plurality of fixed stators respectively having a plurality of coils of different phases, and one carrier or a plurality of carriers with magnet arrays, and actions of each of the carriers are controlled and corrected by feedback of a position of each of the carriers along a moving path. The above has been disclosed in patents EP 3 015 933 A1, US 8 497 643 B2, US 8 796 959 B2, EP 2 182 627 B1, US20190190366A1 and documents "Novel Force Ripple Reduction Method for a Moving-magnet Linear Synchronous Motor with a Segmented Stator", "Cogging Force Verification by Deforming the Shape of the Outlet Edge at the Armature of a Stationary Discontinuous Armature PM-LSM".

Under a premise of not requiring high-precision measurement results, the measurement system can use Hall sensors, which can reduce the complexity and costs of the position feedback measurement system. Wherein the magnet array of DSPM-LSM can be used as a measuring scale, since a distance that each of the Hall sensors can measure is less than a length of a magnet array, in order to provide position feedback information in an entire moving range of the carrier, the Hall sensors must be arranged along a moving direction of the carrier, and measuring ranges of the adjacent sensors are set to overlap each other.

US8497643 discloses a linear scale for obtaining a distance from a reference point, in which operation is performed by mainly using changes in magnetic flux density generated by a magnet and with sine signals and cosine signals sensed by a transducer. However, the method will reduce accuracy due to end-effects of the magnetic flux. In order to improve the precision, US8497643 and US6713902B2 further disclose the moving position or deflection direction of the first and last magnets in the magnet array.

US8796959B2 utilizes the previously measured shifted value between the adjacent sensors in conjunction with the positional relationship of each of the sensors, and uses a single processing unit to perform operation. In this way, the sensors, servo drivers, and processing units need to be arranged in a special digital network, but they will decrease long-term repeatability of the system due to temperature deformation and offset changes.

US20130229134A1 discloses a method of using position feedback in conjunction with offset of the adjacent modules and calibrating an accuracy of the measuring scale. Wherein the discretely configured linear motor system is composed of a plurality of modules, each of the modules comprises a single sensor, a stator and a drive unit, and a plurality of control units are used to control the modules and send position information. Accordingly, this method only uses the single sensor, which results in the carrier having only a single actuation direction effective, which means that when the carrier moves in an opposite direction, it will be too late for the modules to obtain a position of the carrier, as a result, an acting force of the DSPM-LMS is significantly reduced.

US20130037384A1 discloses an enhanced multi-position detection system applied to electromagnetic transmission, which mainly comprises a plurality of magnetic field sensors arranged at a fixed distance on an operating track for detecting positions of transmission elements on the operating track. The sensors are connected to a single processing unit. Furthermore, in order to coordinate with the position feedback detected by the sensors, the patent proposes to increase a quantity of the sensors and their functions; however, this method reduces the possibility of system modularization. Because in industrial applications, modularization of DSPM-LSM can improve the maintainability and substitutability of various components in a system; obviously, the conventional technology is still not sophisticated enough.

US 2020/166389 A1 discloses a position measuring mechanism.

SUMMARY OF THE INVENTION

Therefore, a main object of the invention is to provide a position measuring mechanism and a measuring method of a linear motion system in which two sensors are respectively disposed on two sides of a stator, in addition to allowing a moving portion to perform bidirectional movement, under a premise of not increasing a quantity of the sensors, a measuring range of the sensors can be calculated based on information measured by the sensors themselves.

Another object of the invention is to provide a position measuring mechanism and a measuring method of a linear motion system in which measurement sections respectively measured by two sensors are combined to ensure an accuracy of position feedback, instead of the conventional technique using an operational method of combining sinusoidal and cosine signals.

In order to achieve the above objects, the position measuring mechanism provided by the invention comprises: a base; a moving portion capable of moving relative to the base; at least one magnet array disposed in the moving portion; a first sensing portion and a second sensing portion respectively disposed on the base at intervals for sensing a magnetic field of the magnet array; a third sensing portion having a signal unit disposed on the moving portion, and a sensitive element disposed on the base for sensing the signal unit; and a processing portion receiving sensing signals of the first sensing portion and the second sensing portion respectively, calculating a subcycle corresponding to the magnet array, and performing operation in conjunction with sensing data of the sensitive element to obtain a movement path of the moving portion, and then feeding the movement path back to a driver to adjust a movement pattern of the moving portion.

In one embodiment, the invention further comprises a plurality of measurement modules respectively including the first sensing portion, the second sensing portion and the third sensing portion, and a distance between the two adjacent measurement modules is equal to a length of the magnet array. Wherein, in order to simplify the current commutation law of a stator current, a distance between the two adjacent measurement modules is equal to a length of the magnet array.

Wherein the driver controls a current of the stator provided on the base, and uses a fieldbus to connect to a motion controller, so that information detected by the sensing portions is processed by a single device, thereby reducing the difficulty of identifying a position of a carrier along the movement path.

Another object of the invention is to provide a position measuring method to combine signals sensed by the first sensing portion and the second sensing portion in a measuring range respectively with a juncture.

In order to estimate an exact position of the measuring range, the invention uses subcycle information and amplitudes of signals sensed by the first sensing portion and the second sensing portion for determination.

Wherein the measuring range is divided into a first measurement section of the first sensing portion and a second measurement section of the second sensing portion with the juncture, the first measurement section and the second measurement section are respectively configured along a movement direction of the moving portion and are adjacent to each other.

When the moving portion moves and displaces from right to left, a starting point of the measuring range is defined as: a amplitude of the signal sensed by the first sensing portion is less than a predetermined high threshold value, and a position of the subcycle of a signal sensed by the first sensing portion is equal to 180°; an ending point of the measuring range is defined as: a amplitude of the signal sensed by the second sensing portion is higher than a predetermined low threshold value, and a position of the subcycle of a signal sensed by the second sensing portion is equal to 180°; and

when the moving portion moves and displaces from left to right, a starting point of the measuring range is defined as: the amplitude of the signal sensed by the first sensing portion is greater than the low threshold value, and the position of the subcycle of a signal sensed by the first sensing portion is equal to 180°; an ending point of the measuring range is defined as: the amplitude of the signal sensed by the second sensing portion is less than the low threshold value, and the position of the subcycle of a signal sensed by the second sensing portion is equal to 180°.

**BRIEF DESCRIPTION OF THE DRAWINGS**

In order to enable the examiner to further understand the objects, features, and achieved efficacies of the invention, preferred embodiments are listed below for detailed explanation in conjunction with the drawings, wherein:

FIG. 1 is a schematic diagram of a preferred embodiment of the invention;

FIG. 2 is a schematic diagram of another embodiment of the invention showing that a quantity of measurement modules is two;

FIG. 3 is a schematic diagram of eight magnetic sensitive elements included in a first sensing portion and a second sensing portion in a preferred embodiment of the invention;

FIG. 4 is a schematic diagram of signals sensed by the first sensing portion of a preferred embodiment of the invention;

FIG. 5A is a bottom view of a preferred embodiment of the invention;

FIG. 5B is a side view of a preferred embodiment of the invention;

FIG. 6 is a schematic diagram of signal processing in a preferred embodiment of the invention in which a carrier moves from left to right to a current position; and

FIG. 7 is a schematic diagram of a measuring mechanism of an embodiment of the invention showing lengths, spacings and positional relationships of each of elements.

## DETAILED DESCRIPTION OF THE INVENTION

Hereinafter, a preferred embodiment of the invention is described in conjunction with the drawings.

In a measuring mechanism 10 of a linear motion system provided in a preferred embodiment of the invention, a Doubly Salient Permanent Magnet-Linear Synchronous Motor (DSPM-LSM) of discontinuous stator is taken as an example, and the measuring mechanism 10 comprises a base 20, a moving portion 30 and a measurement module 40.

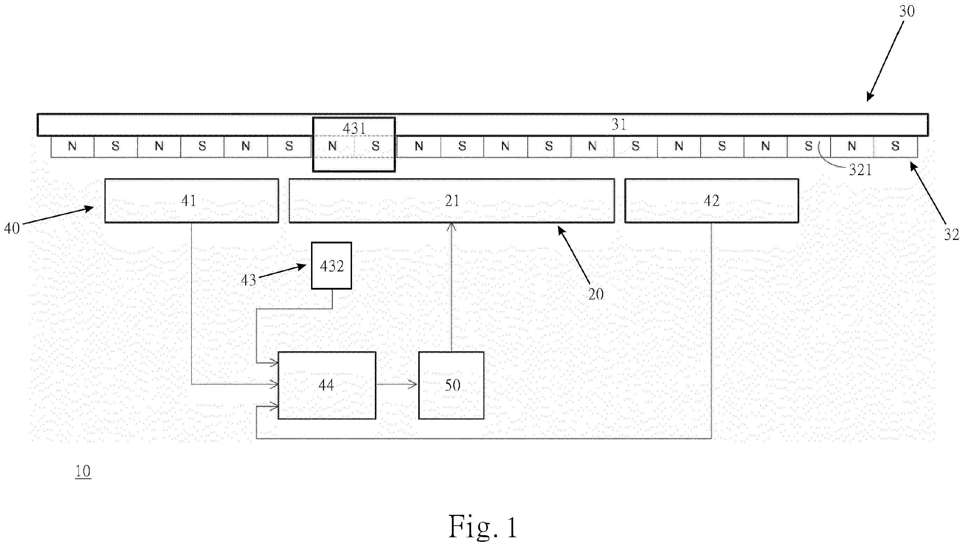

As shown in FIG. 1, the base 20 has a predetermined length (not shown in the figure), and at least one stator 21 is disposed on the base 20 by extending along a long axial direction of the base 20.

The moving portion 30 has a carrier 31 located by one side of the base 20 and separated from the stator 21 from one side of the carrier 31, and a one-dimensional magnet array 32 composed of a plurality of magnets 321 sequentially disposed on the carrier 31, through magnetic field interaction between the stator 21 as a primary side and the magnet array 32, the moving portion 30 is capable of displacing along the long axial direction of the base 20; however, the technical content of using the stator 21 as the primary side and the moving portion 30 as a secondary side pertains to the scope of the prior art and is known by those having ordinary skill in the art to which the invention pertains, so it will not be repeat herein.

The measurement module 40 has a first sensing portion 41, a second sensing portion 42, a third sensing portion 43 and a processing portion 44, wherein:

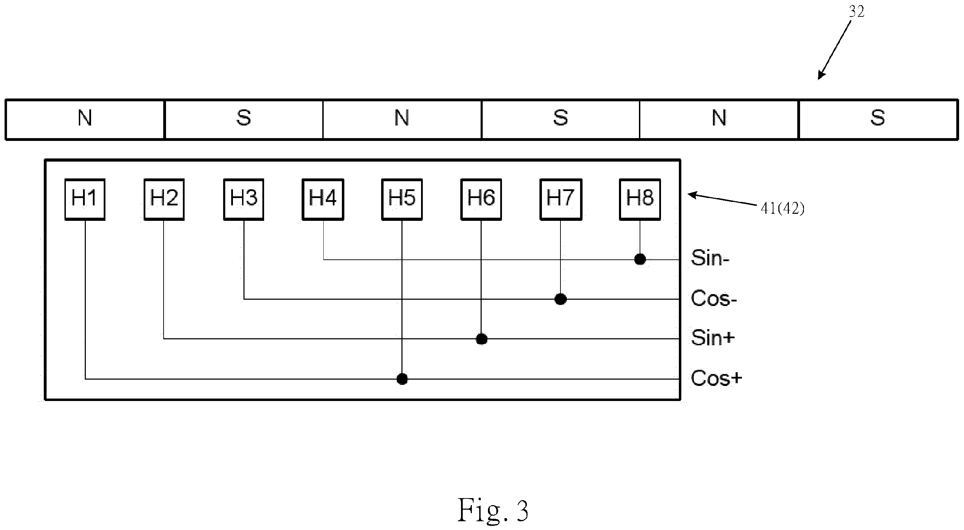

the first sensing portion 41 and the second sensing portion 42 are disposed on the base 20, and are respectively located at two ends of the stator 21 corresponding to the long axial direction of the base 20, thereby the stator 21 is interposed between the first sensing portion 41 and the second sensing portion 42, as shown in FIG. 3, the first sensing portion 41 and the second sensing portion 42 respectively include eight magnetic sensitive elements (Hall sensors, H1-H8) for sensing magnetic field changes of the magnet array 32;

the third sensing portion 43 comprises a signal unit 431 disposed on the carrier 31 to generate specific physical signals, and a sensitive element 432 fixed on the base 20 to sense signals generated by the signal unit 431; and

the processing portion 44 receives sensing data of the first sensing section 41, the second sensing section 42 and the sensitive element 432, after performing operation to obtain position information related to the moving portion 30, the position information is fed back to a driver 50, and then the driver 50 performs power supply control to the stator 21.

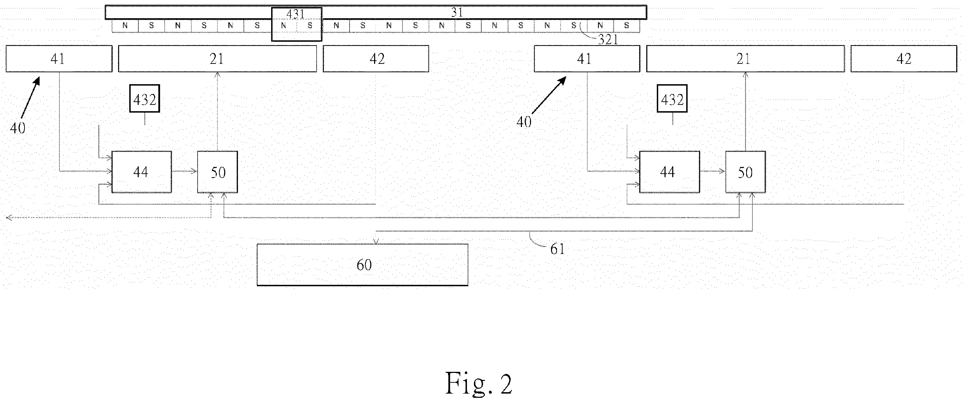

Further, when a moving stroke of the moving portion 30 exceeds a range that a single stator as a primary side is capable of acting on, a quantity of the stator 21 in the base 20 can be made to be numerous, as shown in FIG. 2 illustrating the two stators 21 as an example, the two stators 21 are coaxially fixed on the base 20 along a long axial direction, and a quantity of the measurement module 40 increases to two to match with an increased quantity of the stators 21, but the added measurement module 40 does not include an increase of the signal unit 431, that is, a quantity of the signal unit 431 is the same as a quantity of the carrier 31, and remains single. In this example, a distance between the two adjacent measurement modules 40 is equal to a length of the magnet array 32.

Please refer to FIG. 2 for another embodiment of the invention, differences between this embodiment and the previous preferred embodiment lie in a quantity of the measurement module 40 being two, the two measurement modules 40 being arranged along a movement direction of the carrier 31, and providing position feedback along a movement path. For the convenience of control, the two measurement modules 40 can be connected to each other, and then connected by a fieldbus 61 to a motion controller 60 to handle movement control of the carrier 31 or a plurality of the carriers 31.

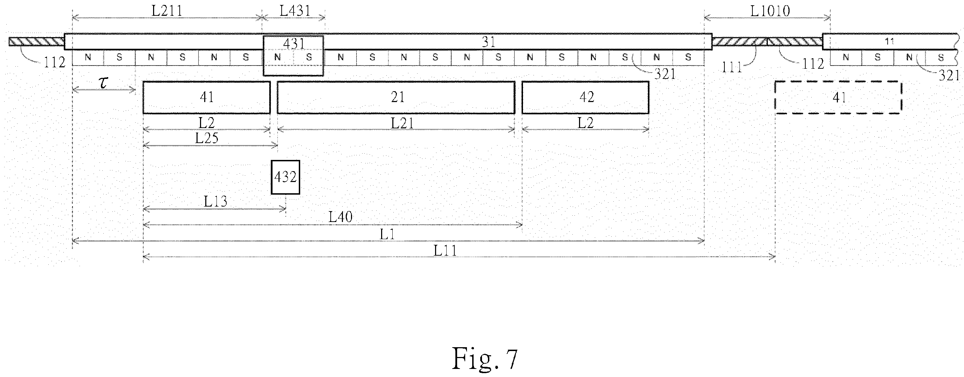

As shown in FIG. 3, the eight magnetic sensitive elements (Hall sensors, H1-H8) respectively included in the first sensing portion 41 or the second sensing portion 42 are arranged from left to right in sequence, and each of the magnetic sensitive elements H1-H8 is shifted on $\tau/4$ along a measuring axis respectively, as shown in FIG. 7, $\tau$ is a magnetic period of the magnet array 32, that is, a distance between the magnets 321 of a same magnetism, so that lengths of the first sensing portion 41 and the second sensing portion 42 are respectively equivalent to the two magnetic periods $\tau$, and the first magnetic sensitive element H1 and the fifth magnetic sensitive element H5, the second magnetic sensitive element H2 and the sixth magnetic sensitive element H6, the third magnetic sensitive element H3 and the seventh magnetic sensitive element H7, the fourth magnetic sensitive element H4 and the eighth magnetic sensitive element H8 are respectively connected in parallel to form four groups to optimize an average feedback error to improve accuracy and sensitivity of position feedback. Signals output by the magnetic sensitive elements H1~H8 connected in parallel in four groups are sine and cosine differential signals of Cos+, Sin+, Cos-, Sin-, as UCos+=Ucos($\alpha$), USin+=Usin($\alpha$), UCos-=-Ucos($\alpha$), USin-=-Usin($\alpha$), where $\alpha$ is a subcycle position (angle) calculated by the processing portion 44 according to a formula $\alpha$=atan2((UCos+-UCos-)/(USin+-USin-)).

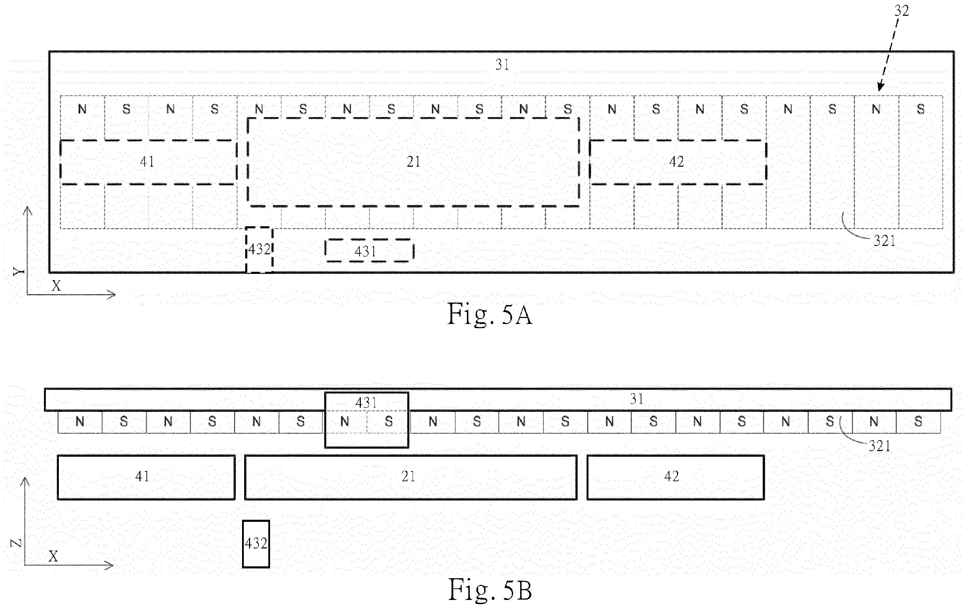

As shown in FIG. 5A, in terms of relative position in an X-axis direction, the first sensing portion 41 is located on a left side of the stator 21, and the second sensing portion 42 is located on a right side of the stator 21; and in a Y-axis direction, in addition to the first sensing portion 41 and the second sensing portion 42 locating relative to a center of the magnets 321 of the magnet array 32 as shown in FIG. 5A, the first sensing portion 41 and the second sensing portion 42 can also be shifted along the Y-axis direction to be located on one side of the magnet array 32 (not shown in the figure). The third sensing portion 43 corresponds to one side of the magnet array 32.

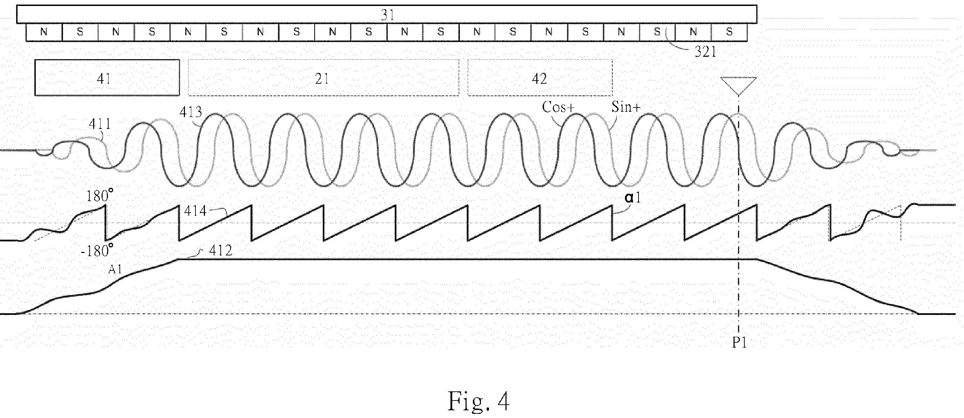

As shown in FIG. 4, during a movement of the carrier 31 moving from left to right to a current position P1, sine 411 amplitude 412 and cosine 413 signal in signals sensed by the first sensing portion 41 will change accordingly, wherein changes of the amplitude 412 will appear when the magnet array 32 does not cover all the magnetic sensitive elements H1-H8, that is, when the carrier 31 enters and exits a measuring range of the first sensing portion 41, the amplitude 412 will decrease, which will cause significant interference in a first cycle and a last cycle of subcycles $\alpha$1, 414, wherein amplitudes A1, 412 are estimated by the following formula:

$$A = \sqrt{(U_{Cos+} - U_{Cos-})^2 + (U_{Sin+} - U_{Sin-})^2}$$ , wherein A is an amplitude, and Cos+, Sin+, Cos-, Sin- are sine and cosine differential signals respectively.

Similarly, sine amplitude and cosine signal in sensing signals output by the second sensing portion 42 also have the same situation as that of the first sensing portion 41.

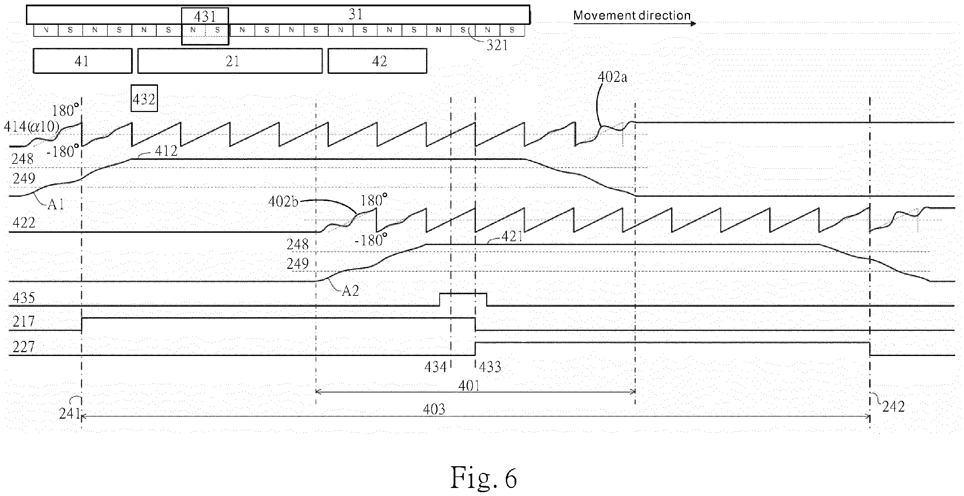

As shown in FIG. 7, the stator 21 is disposed in a space pattern of interposing between the first sensing portion 41 and the second sensing portion 42, a length L21 of the stator 21 is smaller than a separation distance L40 between the first sensing portion 41 and the second sensing portion 42, a length of the separation distance L40 is an integral multiple of the magnetic period $\tau$, and must have a length of at least four magnetic periods $\tau$ to provide a sensing overlapping area 401 of the first sensing portion 41 and the second sensing portion 42 as shown in FIG. 6, and when signals of the first sensing portion 41 and the second sensing portion 42 are combined, signals of cycles 402a, 402b with lower accuracy are excluded. A length L1 of a measuring scale is an integral multiple of the magnetic period $\tau$ and is determined by the following formula 1: $L1 = L40 + (4 + n)r$, wherein n is a natural number containing 0 (formula 1).

In this example, a length of the magnet array 32 is equal to the length L1 of the measuring scale.

As shown in FIG. 6, the third sensing portion 43 is located in the overlapping area 401 to provide a unique and distinct juncture 433 as a signal juncture of the first sensing portion 41 and the second sensing portion 42. In order to ensure a correctness of the juncture 433, it is required to make a length L431 of the signal unit 431 less than two magnetic periods $\tau$ as shown in FIG. 7, and to be determined by positions of a signal 435 of the signal unit 431 and the subcycle 414 of the first sensing portion 41 located at 180°, and in order to avoid influence by the cycles 402a, 402b with lower accuracy, a disposing position of the third sensing portion 43 is limited. For example, when a length of the magnetic sensitive elements H1~H8 is two magnetic periods $\tau$ , the signal unit 431 can be located in third and fourth overlapping periods in the overlapping area 401 of the first sensing portion 41 and the second sensing portion 42.

As shown in FIG. 6, the third sensing portion 43 is used to generate a unique and distinct zero point 434 in the overlapping area 401, and a position of the zero point 434 is defined by the signal unit 431 and the subcycle 414 of the first sensing portion 41, wherein the subcycle 414 of the first sensing portion 41 is equal to a threshold value $\alpha$10, for example, the threshold value $\alpha$10 shown in FIG. 6 is zero, and therefore, the length L431 of the signal unit 431 needs to satisfy formula 2:

$$(\pi - \alpha10) * (\tau/2\pi) < L431 < 2\tau - [(\pi - \alpha10) * (\tau/2\pi)] \text{ (formula 2)}.$$

As shown in FIG. 7, an offset distance (Ls) (not shown in the figure) of the sensitive element 432 is less than one magnetic period $\tau$. A position of the sensitive element 432 is determined by the following formula, relative to an interval length L13 of the first subcycle 414 of the first sensing portion 41, the interval length L13 is:

$$\begin{cases} L13 = (Ls + n)\tau, \\ \quad 0 \le Ls < \tau. \end{cases} \text{(formula 3)};$$

an offset distance Lf (not shown in the figure) of the signal unit 431 is less than half of a length L431 of the signal unit 431, and a distance L211 between the signal unit 431 and the first magnetic period $\tau$ of the magnet array 32 is determined by the following formula 4:

$$\begin{cases} L211 \; = \; L13 - Lf + \; n\tau, \\ L211 \; \leq \; L1 - L13 + Lf - \; 4\tau, \\ \qquad 0 \leq Lf < L431/2. \end{cases} \quad \text{(formula 4)}.$$

For example, in FIG. 6, the offset distance Ls of the sensitive element 432 is 1/4 magnetic period $\tau$, and the offset distance Lf of the signal unit 431 approaches zero.

In addition, the invention is capable of calculating a measuring range 403 of the measurement module 40 according to an action pattern of the moving portion 30. In FIG. 6, when the carrier 31 moves from left to right in a displacement, a starting point 241 and an ending point 242 of the measuring range 403 of the measurement module 40 are defined according to the following formula 5, wherein Alowth is a low threshold value 249, for example Alowth is 25% of a rated amplitude, and Ahighth is a high threshold value 248, for example, Ahighth is 75% of a rated amplitude. Therefore, the processing portion 44 calculates the amplitudes A1, 412 and the subcycles $\alpha$1, 414 of the first sensing portion 41, and amplitudes A2, 421 and subcycles $\alpha$2, 422 of the second sensing portion 42, which means that the amplitudes A1, 412 of the first sensing portion 41 are greater than the low threshold value 249, positions of the subcycles $\alpha$1, 414 of the first sensing portion 41 equal to 180°, the amplitudes A2, 421 of the second sensing portion 42 are lower than the high threshold value 248, and positions of the subcycles $\alpha$2, 422 of the second sensing portion 42 are 180°.

$$\text{Starting point:} \begin{cases} A1 > A_{lowth}, \\ \alpha1 = 180°, \end{cases} \quad \text{ending point:} \begin{cases} A2 < A_{highth}, \\ \alpha2 = 180°, \end{cases} \quad \text{(formula 5)}.$$

When the carrier 31 moves from right to left in a displacement, the starting point 241 and the ending point 242 of the measuring range 403 of the measurement module 40 are defined according to the following formula 6, which means that the amplitudes A1, 412 of the first sensing portion 41 are smaller than the high threshold value 248, positions of the subcycles $\alpha$1, 414 of the first sensing portion 41 equal to 180°, the amplitudes A2, 421 of the second sensing portion 42 are higher than the low threshold value 249, and positions of the subcycles $\alpha$2, 422 of the second sensing portion 42 are 180°.

$$\text{Starting point:} \begin{cases} A2 > A_{lowth}, \\ \alpha2 = 180°, \end{cases} \quad \text{ending point:} \begin{cases} A1 < A_{highth}, \\ \alpha1 = 180°, \end{cases} \quad \text{(formula 6)}.$$

Furthermore, when the carrier 31 enters the measuring range 403, the processing portion 44 feeds back calculated position information of the moving portion 30 to the driver 50, and then the driver 50 is used to control the stator 21 to perform current commutation. In this example, as shown in FIG. 7, a separation distance L25 between the first sensing portion 41 and the stator 21 is adjusted so that each of the magnetic sensitive elements H1~H8 of the first sensing portion 41 are in phase with a coil of the stator 21, thereby simplifying a power supply control mode of the stator 21.

The measuring range 403 is further divided into a first measurement section 217 and a second measurement section 227 based on the juncture 433 as a reference, wherein when the carrier 31 is located on a left side of the juncture 433, the carrier 31 is located in the first measurement section 217, and then the subcycle 414 of the first sensing portion 41 is used to calculate a position of the moving portion 30, and the position is fed back; when the carrier 31 is located on a right side of the juncture 433, the carrier 31 is located in the second measurement section 227, and then the subcycle 422 of the second sensing portion 42 is used to calculate a position of the moving portion 30, and the position is fed back.

In FIG. 7, in order to make the two adjacent measurement modules 40 have an overlapping area, a separation distance L11 between the first sensing portions 41 of each of the measurement modules 40 is equal to the length L1 of the magnet array

Furthermore, as shown in FIG. 7, the two magnet arrays 32 are taken as an example, the two magnet arrays 32 are coaxially fixed on the carrier 31 along a long axial direction, in order to ensure a correctness of the calculated starting point 241 and ending point 242, a minimum spacing 1010 between the two adjacent magnet arrays 32 is equal to a length L2 of the first sensing portion 41, and equivalent to the two magnetic periods $\tau$. In this example, at least one spacer 111, 112 is disposed between the two adjacent magnet arrays 32, and the minimum spacing 1010 is provided by a length of the at least one spacer 111, 112.

It is to be understood that the above description is only preferred embodiments of the present invention and is not used to limit the present invention, and changes in accordance with the concepts of the present invention may be made without departing from the scope of the present invention which is defined by the appended claims.

**Claims**

1.  A position measuring mechanism (10) comprising:

    a base (20);
    a moving portion (30) capable of moving relative to the base (20);
    at least one magnet array (32) disposed in the moving portion (30);
    a first sensing portion (41) and a second sensing portion (42) respectively disposed on the base (20) at intervals for sensing a magnetic field of the magnet array (32);
    a third sensing portion (43) having a signal unit (431) disposed on the moving portion (30), and a sensitive element (432) disposed on the base (20) for sensing the signal unit (431); and
    a processing portion (44) receiving sensing signals of the first sensing portion (41) and the second sensing portion (42) respectively, calculating a subcycle($\alpha 1, \alpha 2$, 414, 422) corresponding to the magnet array (32), and performing operation in conjunction with sensing data of the sensitive element (432) to obtain a movement path of the moving portion (30), and then feeding the movement path back to a driver (50) to adjust a movement pattern of the moving portion (30);
    wherein the magnet array (32) has a plurality of magnets (321), a minimum distance between the two magnets (321) of a same magnetism is a magnetic period ($\tau$) of the magnet array (32), and a length of the magnet array (32) is an integral multiple of the magnetic period ($\tau$) of the magnet array (32),
    wherein the driver (50) controls a current of a stator (21) provided on the base (20), and uses a fieldbus (61) to connect to a motion controller (60),
    wherein
    the first sensing portion (41) and the second sensing portion (42) respectively include eight magnetic sensitive elements (H1,H2,H3,H4,H5,H6,H7,H8), and each of the magnetic sensitive elements (H1,H2,H3,H4,H5,H6,H7, H8) is arranged in order from left to right at a distance of a quarter of the magnetic period ($\tau$) of the magnet array (32), the first magnetic sensitive element (H1) is connected in parallel with the fifth magnetic sensitive element (H5), the second magnetic sensitive element (H2) is connected in parallel with the sixth magnetic sensitive element (H6), the third magnetic sensitive element (H3) is connected in parallel with the seventh magnetic sensitive element (H7), and the fourth magnetic sensitive element (H4) is connected in parallel with the eighth magnetic sensitive element (H8);
    wherein the first sensing portion (41) is located on a left side of the stator (21), and the second sensing portion (42) is located on a right side of the stator (21);
    a separation distance (L40) between the first sensing portion (41) and the second sensing portion (42) is an integral multiple of the magnetic period ($\tau$) of the magnet array (32); a length of the magnet array (32) is greater than the separation distance (L40) between the first sensing portion (41) and the second sensing portion (42), and is at least four magnetic periods ($\tau$) of the magnet array (32); and
    the third sensing portion (43) provides a juncture (433) as a reference to combine signals of the first sensing portion (41) and the second sensing portion (42).

2.  The position measuring mechanism (10) as claimed in claim 1, wherein a quantity of the magnet array (32) is two, and the magnet arrays (32) are arranged adjacent to each other on the moving portion (30), and a spacing between the two adjacent magnet arrays (32) is at least two magnetic periods ($\tau$).

3.  The position measuring mechanism (10) as claimed in claim 1, further comprising a plurality of measurement modules (40) respectively including the first sensing portion (41), the second sensing portion (42) and the third sensing portion (43), and a distance between the two adjacent measurement modules (40) being equal to a length of the magnet array (32).

4.  The position measuring mechanism (10) as claimed in claim 1, wherein the third sensing portion (43) combining signals sensed by the first sensing portion (41) and the second sensing portion (42) in a measuring range (403) respectively with the juncture (433).

5. The position measuring mechanism (10) as claimed in claim 4, wherein the measuring range (403) is divided into a first measurement section (217) of the first sensing portion (41) and a second measurement section (227) of the second sensing portion (42) with the juncture (433), the first measurement section (217) and the second measurement section (227) are respectively configured along a movement direction of the moving portion (30) and are adjacent to each other.

6. The position measuring mechanism (10) as claimed in claim 5, wherein:

   when the moving portion (30) moves and displaces from right to left, a starting point (241) of the measuring range (403) is defined as: a amplitude (A1, 412) of the signal sensed by the first sensing portion (41) is less than a predetermined high threshold value (248), and a position of the subcycle ($\alpha$1, 414) of the signal sensed by the first sensing portion (41) is equal to 180°; an ending point (242) of the measuring range (403) is defined as: a amplitude (A2, 421) of the signal sensed by the second sensing portion (42) is higher than a predetermined low threshold value (249), and a position of the subcycle ($\alpha$2, 422) of the signal sensed by the second sensing portion (42) is equal to 180°; and
   when the moving portion (30) moves and displaces from left to right, a starting point (241) of the measuring range (403) is defined as: the amplitude (A1, 412) of the signal sensed by the first sensing portion (41) is greater than the low threshold value (249), and the position of the subcycle ($\alpha$1, 414) of the signal sensed by the first sensing portion (41) is equal to 180°; an ending point (242) of the measuring range (403) is defined as: the amplitude (A2, 421) of the signal sensed by the second sensing portion (42) is less than the low threshold value (249), and the position of the subcycle ($\alpha$2, 422) of the signal sensed by the second sensing portion (42) is equal to 180°.


**Patentansprüche**

1. Positionsmessmechanismus (10) umfassend:

   eine Basis (20);
   einen Bewegungsabschnitt (30), der in der Lage ist, sich relativ zu der Basis (20) zu bewegen;
   mindestens eine Magnetanordnung (32), die in dem Bewegungsabschnitt (30) angeordnet ist;
   einen ersten Sensorabschnitt (41) und einen zweiten Sensorabschnitt (42), die jeweils auf der Basis (20) in Intervallen angeordnet sind, um ein Magnetfeld der Magnetanordnung (32) zu erfassen;
   einen dritten Sensorabschnitt (43) mit einer Signaleinheit (431), die auf dem Bewegungsabschnitt (30) angeordnet ist, und einem Sensorelement (432), das auf der Basis (20) zum Erfassen der Signaleinheit (431) angeordnet ist; und
   einen Verarbeitungsabschnitt (44), der Sensorsignale des ersten Sensorabschnitts (41) und des zweiten Sensorabschnitts (42) entsprechend empfängt, einen Unterzyklus ($\alpha$1, $\alpha$2, 414, 422) berechnet, der der Magnetanordnung (32) entspricht, und eine Operation in Verbindung mit Sensordaten des Sensorelements (432) durchführt, um einen Bewegungspfad des Bewegungsabschnitts (30) zu erhalten, und dann den Bewegungspfad zurück zu einem Treiber (50) führt, um ein Bewegungsmuster des Bewegungsabschnitts (30) einzustellen;
   wobei die Magnetanordnung (32) eine Vielzahl von Magneten (321) aufweist, ein minimaler Abstand zwischen den zwei Magneten (321) desselben Magnetismus eine magnetische Periode ($\tau$) der Magnetanordnung (32) ist und eine Länge der Magnetanordnung (32) ein ganzzahliges Vielfaches der magnetischen Periode ($\tau$) der Magnetanordnung (32) ist,
   wobei der Treiber (50) einen Strom eines Stators (21) steuert, der an der Basis (20) vorgesehen ist, und einen Feldbus (61) verwendet, um eine Verbindung mit einer Bewegungssteuerung (60) herzustellen,
   wobei
   der erste Sensorabschnitt (41) und der zweite Sensorabschnitt (42) jeweils acht magnetische Sensorelemente (H1, H2, H3, H4, H5, H6, H7, H8) umfassen, und jedes der magnetischen Sensorelemente (H1, H2, H3, H4, H5, H6, H7, H8) in der Reihenfolge von links nach rechts in einem Abstand von einem Viertel der magnetischen Periode ($\tau$) der Magnetanordnung (32) angeordnet ist, das erste magnetische Sensorelement (H1) parallel mit dem fünften magnetischen Sensorelement (H5) verbunden ist, das zweite magnetische Sensorelement (H2) parallel zu dem sechsten magnetischen Sensorelement (H6) geschaltet ist, das dritte magnetische Sensorelement (H3) parallel zu dem siebten magnetischen Sensorelement (H7) geschaltet ist, und das vierte magnetische Sensorelement (H4) parallel zu dem achten magnetischen Sensorelement (H8) geschaltet ist;
   wobei der erste Sensorabschnitt (41) auf einer linken Seite des Stators (21) angeordnet ist und der zweite Sensorabschnitt (42) auf einer rechten Seite des Stators (21) angeordnet ist;

ein Trennungsabstand (L40) zwischen dem ersten Sensorabschnitt (41) und dem zweiten Sensorabschnitt (42) ein ganzzahliges Vielfaches der magnetischen Periode ($\tau$) der Magnetanordnung (32) ist; eine Länge der Magnetanordnung (32) größer ist als der Trennungsabstand (L40) zwischen dem ersten Sensorabschnitt (41) und dem zweiten Sensorabschnitt (42) und mindestens vier magnetische Perioden ($\tau$) der Magnetanordnung (32) beträgt; und

der dritte Sensorabschnitt (43) einen Verbindungspunkt (433) als Referenz bereitstellt, um Signale des ersten Sensorabschnitts (41) und des zweiten Sensorabschnitts (42) zu kombinieren.

2. Positionsmessmechanismus (10) nach Anspruch 1, wobei die Anzahl der Magnetanordnungen (32) zwei beträgt und die Magnetanordnungen (32) nebeneinander auf dem Bewegungsabschnitt (30) angeordnet sind und der Abstand zwischen den beiden benachbarten Magnetanordnungen (32) mindestens zwei magnetische Perioden ($\tau$) beträgt.

3. Positionsmessmechanismus (10) nach Anspruch 1, ferner umfassend eine Vielzahl von Messmodulen (40), die jeweils den ersten Sensorabschnitt (41), den zweiten Sensorabschnitt (42) und den dritten Sensorabschnitt (43) umfassen, wobei ein Abstand zwischen den beiden benachbarten Messmodulen (40) gleich einer Länge der Magnetanordnung (32) ist.

4. Positionsmessmechanismus (10) nach Anspruch 1, wobei der dritte Sensorabschnitt (43) Signale, die von dem ersten Sensorabschnitt (41) und dem zweiten Sensorabschnitt (42) in einem Messbereich (403) aufgenommen werden, jeweils mit dem Verbindungspunkt (433) kombiniert.

5. Positionsmessmechanismus (10) nach Anspruch 4, wobei der Messbereich (403) in einen ersten Messabschnitt (217) des ersten Sensorabschnitts (41) und einen zweiten Messabschnitt (227) des zweiten Sensorabschnitts (42) mit dem Verbindungspunkt (433) unterteilt ist, wobei der erste Messabschnitt (217) und der zweite Messabschnitt (227) jeweils entlang einer Bewegungsrichtung des Bewegungsabschnitts (30) konfiguriert sind und einander benachbart sind.

6. Positionsmessmechanismus (10) nach Anspruch 5, wobei:

wenn sich der Bewegungsabschnitt (30) von rechts nach links bewegt und verschiebt, ein Startpunkt (241) des Messbereichs (403) definiert ist als: eine Amplitude (A1, 412) des von dem ersten Sensorabschnitt (41) aufgenommenen Signals ist kleiner als ein vorbestimmter hoher Schwellenwert (248), und eine Position des Unterzyklus ($\alpha$1, 414) des von dem ersten Sensorabschnitt (41) aufgenommenen Signals ist gleich 180°; ein Endpunkt (242) des Messbereichs (403) definiert ist als: eine Amplitude (A2, 421) des von dem zweiten Sensorabschnitt (42) aufgenommenen Signals höher ist als ein vorbestimmter unterer Schwellenwert (249), und eine Position des Unterzyklus ($\alpha$2, 422) des von dem zweiten Sensorabschnitt (42) aufgenommenen Signals gleich 180° ist; und

wenn sich der Bewegungsabschnitt (30) bewegt und von links nach rechts verschiebt, ein Startpunkt (241) des Messbereichs (403) definiert ist als: die Amplitude (A1, 412) des vom ersten Sensorabschnitt (41) aufgenommenen Signals ist größer als der untere Schwellenwert (249), und die Position des Unterzyklus ($\alpha$1, 414) des vom ersten Sensorabschnitt (41) aufgenommenen Signals ist gleich 180°, ein Endpunkt (242) des Messbereichs (403) ist definiert als: die Amplitude (A2, 421) des von dem zweiten Sensorabschnitt (42) aufgenommenen Signals ist kleiner als der untere Schwellenwert (249) und die Position des Unterzyklus ($\alpha$2, 422) des von dem zweiten Sensorabschnitt (42) aufgenommenen Signals ist gleich 180°.

**Revendications**

1. Mécanisme de mesure de position (10) comprenant :

une base (20) ;
une portion mobile (30) capable de se déplacer par rapport à la base (20) ;
au moins un réseau d'aimants (32) disposé dans la portion mobile (30) ;
une première portion de détection (41) et une deuxième portion de détection (42) respectivement disposées sur la base (20) à intervalles pour détecter un champ magnétique du réseau d'aimants (32) ;
une troisième portion de détection (43) comprenant une unité de signal (431) disposée sur la portion mobile (30), et un élément sensible (432) disposé sur la base (20) pour détecter l'unité de signal (431) ; et

une portion de traitement (44) recevant des signaux de détection de la première portion de détection (41) et de la deuxième portion de détection (42) respectivement, calculant un sous-cycle ($\alpha$1, $\alpha$2, 414, 422) correspondant au réseau d'aimants (32), et réalisant une opération en conjonction avec des données de détection de l'élément sensible (432) pour obtenir un trajet de déplacement de la portion mobile (30), puis transmettant le trajet de déplacement à un dispositif de pilotage (50) pour ajuster un modèle de déplacement de la portion mobile (30) ;
dans lequel le réseau d'aimants (32) comporte une pluralité d'aimants (321), une distance minimale entre les deux aimants (321) de même magnétisme est une période magnétique (T) du réseau d'aimants (32), et une longueur du réseau d'aimants (32) est un multiple entier de la période magnétique (T) du réseau d'aimants (32),
dans lequel le dispositif de pilotage (50) commande un courant d'un stator (21) prévu sur la base (20), et utilise un bus de terrain (61) pour se relier à un dispositif de commande de déplacement (60),
dans lequel la première portion de détection (41) et la deuxième portion de détection (42) comprennent respectivement huit éléments sensibles magnétiques (H1, H2, H3, H4, H5, H6, H7, H8), et chacun des éléments magnétiques sensibles (H1, H2, H3, H4, H5, H6, H7, H8) est agencé dans l'ordre de gauche à droite à une distance d'un quart de la période magnétique (T) du réseau d'aimants (32), le premier élément sensible magnétique (H1) est relié en parallèle avec le cinquième élément sensible magnétique (H5), le deuxième élément sensible magnétique (H2) est relié en parallèle avec le sixième élément sensible magnétique (H6), le troisième élément sensible magnétique (H3) est relié en parallèle avec le septième élément sensible magnétique (H7), et le quatrième élément sensible magnétique (H4) est relié en parallèle avec le huitième élément sensible magnétique (H8) ;
dans lequel la première portion de détection (41) est située sur un côté gauche du stator (21), et la deuxième portion de détection (42) est située sur un côté droit du stator (21) ;
une distance de séparation (L40) entre la première portion de détection (41) et la deuxième portion de détection (42) est un multiple entier de la période magnétique (T) du réseau d'aimants (32) ; une longueur du réseau d'aimants (32) est supérieure à la distance de séparation (L40) entre la première portion de détection (41) et la deuxième portion de détection (42), et est égale à au moins quatre périodes magnétiques (T) du réseau d'aimants (32) ; et la troisième portion de détection (43) fournit une jonction (433) en tant que référence pour combiner des signaux de la première portion de détection (41) et de la deuxième portion de détection (42).

**2.** Mécanisme de mesure de position (10) selon la revendication 1, dans lequel une quantité du réseau d'aimants (32) est de deux, et les réseaux d'aimants (32) sont agencés adjacents l'un à l'autre sur la portion mobile (30), et un espacement entre les deux réseaux d'aimants (32) adjacents est d'au moins deux périodes magnétiques (T).

**3.** Mécanisme de mesure de position (10) selon la revendication 1, comprenant en outre une pluralité de modules de mesure (40) comprenant respectivement la première portion de détection (41), la deuxième portion de détection (42) et la troisième portion de détection (43), et une distance entre les deux modules de mesure (40) adjacents étant égale à une longueur du réseau d'aimants (32).

**4.** Mécanisme de mesure de position (10) selon la revendication 1, dans lequel la troisième portion de détection (43) combine des signaux détectés par la première portion de détection (41) et la deuxième portion de détection (42) dans une plage de mesure (403) respectivement avec la jonction (433).

**5.** Mécanisme de mesure de position (10) selon la revendication 4, dans lequel la plage de mesure (403) est divisée en une première section de mesure (217) de la première portion de détection (41) et une deuxième section de mesure (227) de la deuxième portion de détection (42) avec la jonction (433), la première section de mesure (217) et la deuxième section de mesure (227) sont respectivement configurées le long d'une direction de déplacement de la portion mobile (30) et sont adjacentes l'une à l'autre.

**6.** Mécanisme de mesure de position (10) selon la revendication 5, dans lequel :

lorsque la portion mobile (30) se déplace et effectue un déplacement de droite à gauche, un point de départ (241) de la plage de mesure (403) est défini comme suit : une amplitude (A1, 412) du signal détecté par la première portion de détection (41) est inférieure à une valeur seuil haute (248) prédéterminée, et une position du sous-cycle ($\alpha$1, 414) du signal détecté par la première portion de détection (41) est égale à 180° ; un point final (242) de la plage de mesure (403) est défini comme suit : une amplitude (A2, 421) du signal détecté par la deuxième portion de détection (42) est supérieure à une valeur seuil basse (249) prédéterminée, et une position du sous-cycle ($\alpha$2, 422) du signal détecté par la deuxième portion de détection (42) est égale à 180° ; et lorsque la portion mobile (30) se déplace et effectue un déplacement de gauche à droite, un point de départ (241) de la plage de mesure (403) est défini comme suit : l'amplitude (A1, 412) du signal détecté par la première portion de détection (41) est supérieure à la valeur seuil basse (249), et la position du sous-cycle ($\alpha$1, 414) du signal détecté par la première portion de détection (41) est égale à 180° ; un point final (242) de la plage de mesure (403) est défini comme suit : l'amplitude (A2, 421) du signal détecté par la deuxième portion de détection (42) est inférieure à la valeur seuil basse (249), et la position du sous-cycle ($\alpha$2, 422) du signal détecté par la deuxième portion de détection (42) est égale à 180°.

Fig. 1

Fig. 2

Fig. 3

EP 4 030 146 B1

Fig. 4

EP 4 030 146 B1

| | 31 | | | | 32 |
|---|---|---|---|---|---|

| N | S | N | S | N | S | N | S | N | S | N | S | N | S | N | S | N | S | N | S | N | S |

41

21

42

432   431

321

Y

X

Fig. 5A

| | 431 | 31 | | |
|---|---|---|---|---|

| N | S | N | S | N | S | N | S | N | S | N | S | N | S | N | S | N | S | N | S | N | S |

321

| 41 | 21 | 42 |

432

Z

X

Fig. 5B

Fig. 6

EP 4 030 146 B1

EP 4 030 146 B1

L211  L431

L1010

112

N S N S N S N S | 431 N S | N S N S N S N S N S N S N S

31

11

321

111

112

N S N S

321

τ

| 41 | 21 | 42 |

41

L2

L21

L2

L25

432

L13

L40

L1

L11

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3015933 A1
- US 8497643 B2
- US 8796959 B2
- EP 2182627 B1
- US 20190190366 A1
- US 8497643 B
- US 6713902 B2
- US 20130229134 A1
- US 20130037384 A1
- US 2020166389 A1

### Non-patent literature cited in the description

- Novel Force Ripple Reduction Method for a Moving-magnet Linear Synchronous Motor with a Segmented Stator. *Cogging Force Verification by Deforming the Shape of the Outlet Edge at the Armature of a Stationary Discontinuous Armature PM-LSM*